# EUROPÄISCHE PATENTSCHRIFT

(11) **EP 0 748 742 B1**
(45) Veröffentlichungstag und Bekanntmachung des Hinweises auf die Patenterteilung: **10.12.2003**
(21) Anmeldenummer: 96108729.3
(22) Anmeldetag: 31.05.1996
(51) Int. Cl.: B65D 19/00, C08L 23/02, C08K 7/14

(54) **Palette aus langfaserverstärktem Polyolefin**
Long fiber-reinforced polyolefine pallet
Palette en polyoléfine renforcée par des fibres longues

(30) Priorität: 16.06.1995 DE 19521839
(43) Veröffentlichungstag der Anmeldung: 18.12.1996
(73) Patentinhaber: Ticona GmbH, 65451 Kelsterbach (DE)
(72) Erfinder: Skaletz, Detlef, Dr., 55128 Mainz (DE); Mehmke, Karin, Dr., 60486 Frankfurt (DE)

(56) Entgegenhaltungen:
- EP-A- 0 056 703
- EP-A- 0 068 585
- EP-A- 0 439 625
- EP-A- 0 639 446
- US-A- 5 041 258
- PATENT ABSTRACTS OF JAPAN vol. 13, no. 577 (M-910), 20.Dezember 1989 & JP 01 241406 A (MITSUBOSHI BELTING), 26.September 1989,
- P.L. KEENEY ET AL: "NEW INJECTION MOULDING APPLICATIONS FOR LONG FIBRE REINFORCED THERMOPLASTICS" KUNSTSTOFFE EUROPE, Nr. 2, 1.August 1991, MÜNCHEN DE, Seiten 222-228, XP000288893
- C.R. GORE: "Long Fibre Reinforced Thermoplastic Injection Moulding Compounds " COMPOSITE POLYMERS, Bd. 1, Nr. 4, 1988, SHREWSBURY GB, Seiten 280-299, XP000000283
- PATENT ABSTRACTS OF JAPAN vol. 96, no. 8, 30.August 1996 & JP 08 091370 A (IDEMITSU PETROCHEM CO LTD), 9.April 1996,
- PATENT ABSTRACTS OF JAPAN vol. 96, no. 2, 29.Februar 1996 & JP 07 268192 A (MITSUBISHI CHEM CORP), 17.Oktober 1995,

## Beschreibung

Die Erfindung betrifft eine Palette aus Thermoplastwerkstoff mit verbesserten mechanischen Eigenschaften.

An Lager-, Transport- und Verpackungspaletten, die beispielsweise beim Transport durch Stoß und/oder Schlag einer starken Beanspruchung ausgesetzt sind, werden hohe Anforderungen, beispielsweise hinsichtlich Steifigkeit, Schlagzähigkeit und Kerbschlagzähigkeit gestellt.

Ein konventioneller Werkstoff für Lager- und Transportpaletten ist Holz. Dieser Werkstoff besitzt zwar eine hohe Steifigkeit, weist jedoch auch etliche Nachteile, beispielsweise hinsichtlich Optik, Sauberkeit, Wasserfestigkeit, Hygiene, Lebensdauer und Wiederverwertbarkeit auf.

Durch die Verwendung von Thermoplasten, vorzugsweise Polyolefinen, wie HD-Polyethylen (HDPE) und Polypropylen (PP), für Lager-, Transport- und Verpackungspaletten können zwar die Nachteile die die Verwendung von Holz mit sich bringt, beseitigt werden, jedoch weisen solche Paletten nicht die gewünschte Steifigkeit auf.

Auch die Verwendung kurzfaserverstärkter Thermoplaste mit dem Ziel der Verbesserung der mechanischen Eigenschaften bringt für diesen Verwendungszweck keine Vorteile, da bereits die Einlagerung geringer Kurzfaseranteile zur Versprödung führt (vgl. Plaste und Kautschuk Heft 5/1986, 184-187).

EP-A-0068585 offenbart eine Palette hergestellt aus einer Mischung eines Polyethylens und / oder eines Polypropylens mit Langglasfasern.

JP-A-01241406 beschreibt ein Verfahren zur Herstellung von Formkörpern durch Spritzguss unter Verwendung einer Mischung aus langfaserverstärkten und nicht langfaserverstärkten Granulatkörnern.

Aus der EP-A-0 639 446 ist bekannt, daß eine Verstärkung von HDPE mit 2 bis 8 Gew.-% Langglasfasern von Vorteil ist. Für höhere Fasergehalte wird für auf Stoß und Schlag beanspruchte Spritzgußformteile eine unzulässige Versprödung offenbart.

Der vorliegenden Erfindung liegt daher die Aufgabe zugrunde eine Palette bereitzustellen, die sich durch eine hohe Steifigkeit und gleichzeitig eine für derartige Anwendungen ausreichend hohe Schlag- und Kerbschlagzähigkeit auszeichnet.

Erfindungsgemäß wird die Aufgabe durch eine Patette gemäß dem Anspruch 1, ein Lager-, Transport- und Verpackungshilfsmittel, insbesondere eine Lager-, Transport- und Verpackungspalette gelöst.

In einer bevorzugten Ausführungsform der Erfindung liegt die Menge an Glasfasern in der Mischung im Bereich von 9 bis 20 Gew.-%.

Der Thermoplastwerkstoff für die Palette besteht vorzugsweise aus einer Mischung eines Polyethylens (A1) oder Polypropylens (B1) mit einem langglasfaserverstärkten Polyethylen (A2) bzw. Polypropylen (B2), wobei das Polyethylen (A1) vorzugsweise eine Dichte im Bereich von 0,92 bis 0,97 g/cm³ und einen Schmelzindex MFI 190/2,16, gemessen nach ISO 1133; DIN 53 735, im Bereich von 2 bis 50 g/10 min aufweist. Das Polypropylen (B1) weist vorzugsweise eine Dichte von 0,87 bis 0,91 g/cm³ und einen Schmelzindex MFI 230/2,16 im Bereich von 2 bis 50 g/10 min auf. Das Polyethylen (A2) und Polypropylen (B2) besteht vorzugsweise aus einem durch Schmelz-Pultrusion hergestellten langglasfaserverstärkten Polyethylen bzw. Polypropylen mit einem Glasfasergehalt im Bereich von vorzugsweise 40 bis 60 Gew.-% Glasfasern. Das Polyethylen (A2) besitzt vorzugsweise eine Dichte im Bereich von 0,92 bis 0,97 g/cm³ und einen Schmelzindex MFI 190/2,16 im Bereich von 4 bis 50 g/10 min. Das Polypropylen (B2) weist vorzugsweise eine Dichte von 0,89 bis 0,91 g/cm³ und einen Schmelzindex MFI 230/2,16 im Bereich von 10 bis 50 g/10 min auf. Dabei können die Polyethylene (A1, A2) bzw. Polypropylene (B1, B2) der beiden Mischungskomponenten gleich oder verschieden sein.

Als Polyethylen (A1) und Polypropylen (B1) können auch Regenerate oder auch sog. Recyklate eingesetzt werden.

Die langglasfaserverstärkten Polymere (A2, B2) können nach einem Verfahren, wie z.B. in der EP-A-0 579 047 offenbart, hergestellt werden.

Überraschenderweise wurde gefunden, daß die erfindungsgemäßen Paletten nicht nur die statischen sondern auch die dynamischen Prüfungen für Flachpaletten nach DIN 15 141, Teil 2 bestehen, wobei insbesondere überraschend ist, daß die Eckfallprüfung ohne Brüche überstanden wird.

Mit seinen vorteilhaften physikalischen Eigenschaften kann eine erfindungsgemäße Palette bei bestimmungsgemäßem Einsatzzweck als Lager-, Transport- und Verpackungspalette verlängerte Verwendungsdauer, insbesondere auch unter erhöhten mechanischen und thermischen Belastungen der Palette erreichen.

Die Erfindung wird nachfolgend anhand von Ausführungsbeispielen näher erläutert.

### Beispiel 1:

Mit einer üblichen Dosierstation wird direkt in den Trichter der Spritzgußmaschine zu herkömmlichem HDPE (A1, Hostalen®GC 7260)) mit einer Dichte von 0,957 g/cm³ und einem MFI 190/2,16 von 8 g/10 min ca. 15
Gew.-% langglasfaserverstärktes Polyethylen (A2, Celstran®HDPE-GF 60-03) mit 60 Gew.-% Fasergehalt zudosiert. Der durch Veraschung des Polymers bestimmte Glasfasergehalt im Spritzgußformteil beträgt durchschnittlich 8 Gew.-%.

### Beispiel 2:

Analog zu Beispiel 1 wird eine Mischung aus herkömmlichem Polypropylen (PP) (B1, Vestolen® PV 7216) mit einer Dichte von 0,90 g/cm³ und einem MFI 230/2,16 von 7g/10 min mit 20 Gew.-% langglasfaserverstärktem Polypropylen (B2, Celstran®PP-GF40-04) mit 40 Gew.-% Fasergehalt verarbeitet. Der durch Veraschung des Polymers bestimmte Glasfasergehalt im Spritzgußformteil beträgt durchschnittlich 8 Gew.-%.

### Beispiel 3:

Analog zu Beispiel 2 wird eine Mischung aus herkömmlichem Polypropylen (PP) (B1, Vestolen® PV 7216) mit einer Dichte von 0,90 g/cm³ und einem MFI 230/2,16 von 7g/10 min mit 30 Gew.-% langglasfaserverstärktem Polypropylen (B2, Celstran®PP-GF40-04) mit 40 Gew.-% Fasergehalt verarbeitet. Der durch Veraschung des Polymers bestimmte Glasfasergehalt im Spritzgußformteil beträgt durchschnittlich 12 Gew.-%.

Für den Spritzguß wird eine Spritzgußmaschine des Typs KM 4000-62000 MZ der Firma Krauss-Maffei mit offenen Düsen eingesetzt. Die Maschine ist mit einer Zwillingsplastifizierung mit Dreizonenschnecken jeweils vom Durchmesser 210 mm bestückt. Folgende Spritzgußbedingungen werden eingehalten:

| | |
|---|---|
| Zylindertemperatur | 230 bis 250°C |
| Werkzeugtemperatur | 40°C |
| spezifischer Spritzdruck | 800 bis 950 bar |
| spezifischer Staudruck | 180 bar |
| Einspritzgeschwindigkeit | 20 bis 30 % der maximalen Einspritzgeschwindigkeit |
| Nachdruck | 600 bar |
| Nachdruckzeit | 30 s |
| Kühlzeit | 60 s |

Die langglasfaserverstärkten Polymere (A2, B2) werden nach einem Verfahren , wie z.B. in der EP-A-0 579 047 offenbart, hergestellt.

Aus diesen Mischungen werden Paletten spritzgegossen. Tabelle 1 faßt die Ergebnisse zusammen, die an zweiteilig spritzgegossenen Paletten gewonnen werden. Ober- und Unterdruck der Paletten werden spiegelverschweißt.

| Schweißbedingungen: | |
|---|---|
| Anheizzeit | 30 s |
| Anpreßzeit | 33 s |
| Temperatur | 250°C für Polyethylen-Variante 230°C für Polypropylen-Variante |
| Anpreßdruck | 6 bar |

Die verschweißten Paletten haben durchschnittlich die Abmessungen 1200 x 1000 x 200 mm und ein Gewicht von 30 bis 34 kg, je nach Materialvariante.

### Vergleichsbeispiel 1

Es wird eine entsprechend den Beispielen 1 bis 3 hergestellte Palette aus unverstärktem, herkömmlichen HDPE der Dichte 0.954 g/cm³ und einem MFI 190/2 ,16 von 4 g/10 min spritzgegossen.

Die Prüfung der Biegefestigkeit und die Eckfallprüfung werden nach DIN 15 141, Teil 2 durchgeführt. Diese Norm fordert für die Eckfallprüfung einer Palette mit einem Gewicht ab 30 kg zwar nur eine Fallhöhe von 0,5 m, abweichend davon wird eine Fallhöhe von 1 m eingestellt. Die Ergebnisse werden in Tabelle 1 wiedergegeben.

**Tabelle 1**

| Beispiel Nr. | Durchbiegung unter Belastung mit 1,5 t (15.000 N) nach 24 h [mm] | Verbleibende Durchbiegung nach 1 h Entlastung [mm] | Ergebnisse der Fallprüfung aus 1 m Fallhöhe |
|---|---|---|---|
| 1 | 9,98 | 2,48 | kein Bruch nach 3 Fällen |
| 2 | 7,20 | 1,34 | kein Bruch nach 3 Fällen |
| 3 | 6,41 | 0,98 | kein Bruch nach 3 Fällen |
| Vergleichsbeispiel 1 | 22,10 | 6,20 | kein Bruch nach 3 Fällen |

## Patentansprüche

1. Palette, hergestellt aus einer Mischung eines Polyethylens (A) und / oder Polypropylens (B) mit Langglasfasern, **dadurch gekennzeichnet, dass** die Palette ein Gewicht ab 30 kg aufweist, die Glasfaserlänge mindestens 5 mm beträgt und der Glasfasergehalt der Mischung 8 bis 25 Gew.-% bezogen auf das Gesamtgewicht aus Glasfasern plus Polyethylen und/oder Polypropylen ,beträgt.

2. Palette gemäß Anspruch 1, **dadurch gekennzeichnet, dass** der Glasfasergehalt der Mischung im Bereich von 9 bis 20 Gew.-% liegt.

3. Palette gemäß Anspruch 1 oder 2, **dadurch gekennzeichnet, dass** das Polyethylen (A) aus einer Mischung aus einem Polyethylen (A1) mit einem langglasfaserverstärkten Polyethylen (A2) besteht.

4. Palette gemäß Anspruch 3, **dadurch gekennzeichnet, dass** das Polyethylen (A1) eine Dichte im Bereich von 0,92 bis 0,97 g/cm³ und einen Schmelzindex MFI 190/2,16 von 2 bis 50 g/10 min aufweist.

5. Palette gemäß Anspruch 3 oder 4, **dadurch gekennzeichnet, dass** das Polyethylen (A2) aus einem durch Schmelz-Pultrusion hergestellten langglasfaserverstärkten Polyethylen mit einer Dichte von 0,92 bis 0,97 g/cm³, einem Schmelzindex MFI 190/2,16 von 4 bis 50 g/10 min und einem Glasfasergehalt im Bereich von 40 bis 60 Gew.-% Glasfasern besteht.

6. Palette gemäß mindestens einem der Ansprüche 3 bis 5, **dadurch gekennzeichnet, dass** die Polyethylene der beiden Mischungskomponenten verschieden sind.

7. Palette gemäß Anspruch 1 oder 2, **dadurch gekennzeichnet, dass** das Polypropylen (B) aus einer Mischung aus Polypropylen (B1) mit einem langglasfaserverstärkten Polypropylen (B2) besteht.

8. Palette gemäß Anspruch 7, **dadurch gekennzeichnet, dass** das Polypropylen (B1) eine Dichte im Bereich von 0,87 bis 0,91 g/cm³ und einen Schmelzindex MFI 230/2,16 von 2 bis 50 g/10 min aufweist.

9. Palette gemäß Anspruch 7 oder 8, **dadurch gekennzeichnet, dass** das Polypropylen (B2) aus einem durch Schmelz-Pultrusion hergestellten langglasfaserverstärkten Polypropylen mit einer Dichte von 0,89 bis 0,91 g/cm³, einem Schmelzindex MFI 230/2,16 von 10 bis 50 g/10 min und einem Glasfasergehalt im Bereich von 40 bis 60 Gew.-% Glasfasern besteht.

10. Palette gemäß mindestens einem der Ansprüche 7 bis 9, **dadurch gekennzeichnet, dass** die Polypropylene der beiden Mischungskomponenten verschieden sind.

11. Palette gemäß mindestens einem der Ansprüche 1 bis 10, **dadurch gekennzeichnet, dass** das Polyethylen (A1) oder Polypropylen (B1) ein Regenerat ist.

## Claims

1. Pallet, produced from a mixture of a polyethylene (A) and/or polypropylene (B) with long glass fibres, **characterized in that** the weight of the pallet is at least 30 kg, the glass fibre length is at least 5 mm and the glass fibre content of the mixture is from 8 to 25% by weight, based on the total weight composed of glass fibres plus polyethylene and/or polypropylene.

2. Pallet according to Claim 1, **characterized in that** the glass fibre content of the mixture is in the range from 9 to 20% by weight.

3. Pallet according to Claim 1 or 2, **characterized in that** the polyethylene (A) is composed of a mixture of a polyethylene (A1) with a long-glass-fibre-reinforced polyethylene (A2).

4. Pallet according to Claim 3, **characterized in that** the density of the polyethylene (A1) is in the range from 0.92 to 0.97 g/cm³ and its melt index MFI 190/2.16 is from 2 to 50 g/10 min.

5. Pallet according to Claim 3 or 4, **characterized in that** the polyethylene (A2) is composed of a long-glass-fibre-reinforced polyethylene produced by melt pultrusion with a density of from 0.92 to 0.97 g/cm³, a melt index MFI 190/2.16 of from 4 to 50 g/10 min and a glass fibre content in the range from 40 to 60% by weight of glass fibres.

6. Pallet according to at least one of Claims 3 to 5, **characterized in that** the polyethylenes of the two components of the mixture are different.

7. Pallet according to Claim 1 or 2 **characterized in that** the polypropylene (B) is composed of a mixture of polypropylene (B1) with a long-glass-fibre-reinforced polypropylene (B2).

8. Pallet according to Claim 7, **characterized in that** the density of the polypropylene (B1) is in the range from 0.87 to 0.91 g/cm³ and its melt index MFI 230/2.16 is from 2 to 50 g/10 min.

9. Pallet according to Claim 7 or 8, **characterized in that** the polypropylene (B2) is composed of a long-glass-fibre-reinforced polypropylene produced by melt pultrusion with a density of from 0.89 to 0.91 g/cm³, a melt index MFI 230/2.16 of from 10 to 50 g/10 min and a glass fibre content in the range from 40 to 60% by weight of glass fibres.

10. Pallet according to at least one of Claims 7 to 9, **characterized in that** the polypropylenes of the two components of the mixture are different.

11. Pallet according to at least one of Claims 1 to 10, **characterized in that** the polyethylene (A1) or polypropylene (B1) is a regrind.

## Revendications

1. Palette réalisée en un mélange d'un polyéthylène (A) et/ou d'un polypropylène (B) avec des fibres de verre allongées, **caractérisée en ce que** la palette présente un poids partant de 30 kg, **en ce que** la longueur des fibres de verre est d'au moins 5 mm et **en ce que** la teneur en fibres de verre dans le mélange est de 8 à 25% en poids par rapport au poids total des fibres de verre et du polyéthylène et/ou du polypropylène.

2. Palette selon la revendication 1, **caractérisée en ce que** la teneur en fibres de verre dans le mélange est comprise dans la plage de 9 à 20% en poids.

3. Palette selon la revendication 1 ou 2, **caractérisée en ce que** le polyéthylène (A) est constitué d'un mélange d'un polyéthylène (A1) et d'un polyéthylène (A2) renforcé par des fibres de verre allongées.

4. Palette selon la revendication 3, **caractérisée en ce que** le polyéthylène (A1) présente une masse spécifique comprise dans la plage de 0,92 à 0,97 g/cm³ et un indice de fusion MFI 190/2,16 de 2 à 50 g/10 min.

5. Palette selon la revendication 3 ou 4, **caractérisée en ce que** le polyéthylène (A2) est constitué d'un polyéthylène renforcé de fibres de verre allongées, préparé par pultrusion à l'état fondu, d'une masse spécifique de 0,92 à 0,97 g/cm³, avec un indice de fusion MFI 190/2,16 de 4 à 50 g/10 min et une teneur en fibres de verre comprise dans la plage de 40 à 60% en poids de fibres de verre.

6. Palette selon au moins l'une des revendications 3 à 5, **caractérisée en ce que** les polyéthylènes des deux composants du mélange sont différents.

7. Palette selon la revendication 1 ou 2, **caractérisée en ce que** le polypropylène (B) est constitué d'un mélange d'un polypropylène (B1) et d'un polypropylène (B2) renforcé de fibres de verre allongées.

8. Palette selon la revendication 7, **caractérisée en ce que** le polypropylène (B1) présente une masse spécifique comprise dans la plage de 0,87 à 0,91 g/cm³ et un indice de fusion MFI 230/2,16 de 2 à 50 g/10 min.

9. Palette selon la revendication 7 ou 8, **caractérisée en ce que** le polypropylène (B2) est constitué d'un polypropylène renforcé de fibres de verre allongées, préparé par pultrusion à l'état fondu, d'une masse spécifique de 0,89 à 0,91 g/cm³, avec un indice de fusion MFI 230/2,16 de 10 à 50 g/10 min et une teneur en fibres de verre comprise dans la plage de 40 à 60% en poids de fibres de verre.

10. Palette selon au moins l'une des revendications 7 à 9, **caractérisée en ce que** les polypropylènes des deux composants du mélange sont différents.

11. Palette selon au moins l'une des revendications 1 à 10, **caractérisée en ce que** le polyéthylène (A1) ou le polypropylène (B1) est un produit de recyclage.
